# EUROPÄISCHE PATENTANMELDUNG

(11) **EP 4 541 763 A1**
(43) Veröffentlichungstag der Anmeldung: **23.04.2025**
(21) Anmeldenummer: 23020478.6
(22) Anmeldetag: 19.10.2023
(51) Int. Cl.: C01B 3/34, C01B 3/48, C01B 3/56, C01B 3/50

(54) **VERFAHREN UND VORRICHTUNG ZUR KOHLENDIOXIDARMEN WASSERSTOFFERZEUGUNG**

(71) Anmelder: Linde GmbH, 82049 Pullach (DE)
(72) Erfinder: Seliger, Andreas, 82049 Pullach (DE); Haselsteiner, Thomas, 82049 Pullach (DE); Schwarzhuber, Josef, 82049 Pullach (DE); Müller-Thorwart, Ole, 82049 Pullach (DE)
(74) Vertreter: Fischer, Werner

(57) **Zusammenfassung**

Die Erfindung betrifft ein Verfahren sowie eine Vorrichtung zur Erzeugung eines Wasserstoffprodukts (11), bei dem ein kohlenstoffhaltiger Einsatz (1) durch Reformierung (R) und Wassergas-Shift (S) umgesetzt wird, um ein Wasserstoff und Kohlendioxid enthaltenes Synthesegas (5) zu gewinnen, von dem in einem CO₂-Trennschritt (T) Kohlendioxid (7) zum Erhalt von Rohwasserstoff (6) abgetrennt wird, der unter Einsatz eines Druckwechseladsorbers (D) zum Wasserstoffprodukt (11) aufbereitet wird, wobei ein im Druckwechseladsorber (D) anfallendes kohlenstoffarmes, wasserstoffreiches Restgas (DWA-Restgas) (9) zur Erzeugung von Prozesswärme verbrannt und das im CO₂-Trennschritt (T) aus dem Synthesegas (5) abgetrennte Kohlendioxid (7) durch Sequestrierung entsorgt oder einer stofflichen Nutzung zugeführt wird. Kennzeichnend hierbei ist, dass die Druckwechseladsorption (D) stets so betrieben wird, dass das wasserstoffreiche DWA-Restgas (9) in einer Menge anfällt, die ausreicht, um den gesamten Bedarf an Prozesswärme allein durch die Verbrennung von DWA-Restgas (9) zu decken.

## Beschreibung

Die Erfindung betrifft ein Verfahren zur Erzeugung eines Wasserstoffprodukts, bei dem ein kohlenstoffhaltiger Einsatz durch Reformierung und Wassergas-Shift umgesetzt wird, um ein Wasserstoff und Kohlendioxid enthaltenes Synthesegas zu gewinnen, von dem in einem CO₂-Trennschritt Kohlendioxid zum Erhalt von Rohwasserstoff abgetrennt wird, der unter Einsatz eines Druckwechseladsorbers zum Wasserstoffprodukt aufbereitet wird, wobei ein im Druckwechseladsorber anfallendes kohlenstoffarmes, wasserstoffreiches Restgas (DWA-Restgas) zur Erzeugung von Prozesswärme verbrannt und das im CO₂-Trennschritt aus dem Synthesegas abgetrennte Kohlendioxid durch Sequestrierung entsorgt oder einer stofflichen Nutzung zugeführt wird.

Weiterhin betrifft die Erfindung eine Vorrichtung zur Durchführung des erfindungsgemäßen Verfahrens.

Wasserstoffprodukte wie Reinwassersoff, der wenigstens zu 99,5mol-% aus Wasserstoff besteht, oder Ammoniaksynthesegas, in dem Wasserstoff und Stickstoff im Verhältnis 3:1 vorliegen, werden heute noch überwiegend aus kohlenstoffhaltigen Einsätzen unter Bildung und Freisetzung großer Mengen klimaschädlichen Kohlendioxids erzeugt. Doch gibt es verstärkt Anstrengungen, das anfallende Kohlendioxid nicht in die Atmosphäre zu entlassen, sondern durch Sequestrierung oder stoffliche Nutzung zu entsorgen.

Nach dem Stand der Technik wird zur Erzeugung eines Wasserstoffprodukts ein kohlenstoffhaltiger Einsatz, bei dem es sich etwa um Erdgas handelt, ggf. entschwefelt und anschließend durch Partielle Oxidation, Autothermalreformierung, Dampfreformierung oder eine Kombination von zwei oder mehr dieser Verfahren zu einem als Syntheserohgas bezeichneten Gasgemisch umgesetzt, das zu einem großen Teil aus Wasserstoff, Kohlenmonoxid sowie Kohlendioxid besteht und daneben noch weitere Stoffe wie z.B. Methan oder Argon enthalten kann. Anschließend wird das Syntheserohgas einer Wassergas-Konvertierung unterzogen, um das enthaltene Kohlenmonoxid mit Wasser zu Wasserstoff und Kohlendioxid umzusetzen und ein weitgehend aus Wasserstoff und Kohlendioxid bestehendes Synthesegas zu gewinnen. In einem typischerweise als Sauergaswäsche durchgeführten CO₂-Trennschritt wird Kohlendioxid aus dem Synthesegas abgetrennt, wobei eine Kohlendioxidfraktion mit einer für ihre Sequestrierung oder stofflichen Nutzung ausreichenden Reinheit sowie eine als Rohwasserstoff bezeichnete Wasserstofffraktion erhalten werden, die Reste von Kohlenmonoxid, Kohlendioxid und Methan enthält, und deren Wasserstoffgehalt gewöhnlich bei ca. 98mol-% liegt.

Zur Bildung des Wasserstoffprodukts wird der Rohwasserstoff unter Einsatz eines Druckwechseladsorbers (kurz DWA) behandelt, wobei er mit erhöhtem Druck durch einen Adsorber strömt, der mit einem Material gefüllt ist, das die im Rohwasserstoff enthaltenen Verunreinigungen - insbesondere Kohlendioxid, Kohlenmonoxid und Methan - adsorbiert und festhält, während es den Wasserstoff weitgehend ungehindert passieren lässt. Bei der aus dem Adsorber austretenden Wasserstofffraktion handelt es sich daher um Reinwasserstoff.

Da die Aufnahmefähigkeit des Adsorbermaterials für die Verunreinigungen begrenzt ist, muss der Rohwasserstoffstrom in den Adsorber nach einer gewissen Zeit unterbrochen werden, ehe sich die Reinheit der austretenden Wasserstofffraktion zu stark vermindert. Während der Rohwasserstoff zu einem anderen Adsorber des Druckwechseladsorbers mit noch aufnahmefähigem Adsorbermaterial umgelenkt wird, wird der mit Verunreinigungen beladene Adsorber regeneriert. Hierzu wird der Druck im Adsorber bis auf den sog. Regenerierdruck abgesenkt, um die adsorbierten Verunreinigungen vom Adsorbermaterial zu desorbieren. Damit die Verunreinigungen möglichst vollständig entfernt werden, wird der Adsorber während und/oder nach der Druckabsenkung mit Spülgasen aus der Regeneration der weiteren Adsorber gespült und mit Reinwasserstoff endgereinigt und aufgedrückt, wobei ein kohlenstoffarmes, überwiegend aus Wasserstoff bestehendes, als DWA-Restgas bezeichnetes Gasgemisch auf niedrigem Druckniveau anfällt. Je geringer der Regenerierdruck ist, desto weniger Regeneriergas ist nötig, um die Verunreinigungen zu desorbieren, so dass die Wasserstoffausbeute steigt.

Kohlendioxid ist nicht nur in Synthesegasen, sondern auch in Rauchgasen enthalten, die bei der Erzeugung von Wasserstoffprodukten in Reformern und/oder Öfen entstehen, zu deren Beheizung gewöhnlich ein kohlenstoffhaltiger Brennstoff wie Erdgas eingesetzt wird. Anders als das Synthesegas, sind die Rauchgase drucklos. Da sie deshalb nur sehr kostenintensiv und aufwendig, etwa durch eine Sauergaswäsche behandelt werden können, werden sie gewöhnlich zusammen mit dem bei der Verbrennung gebildeten Kohlendioxid in die Atmosphäre entlassen.

Zur Reduzierung der freigesetzten Kohlendioxidmenge ist es aus dem Stand der Technik bekannt, das kohlenstoffarme und wasserstoffreiche DWA-Restgas zur Erzeugung von Prozesswärme zu verfeuern. Da die Druckwechseladsorption auf eine hohe Wasserstoffausbeute hin optimiert ist, kann es sein, dass nicht genug DWA-Restgas erhalten wird, um den Brennstoffbedarf des Verfahrens allein durch die Verbrennung von DWA-Restgas zu decken, so dass zusätzlich ein kohlenstoffhaltiger Brennstoff unter Freisetzung großer Kohlendioxidmengen verfeuert werden muss.

Mit den beschriebenen Methoden lassen sich daher nur maximal 90% des zur Erzeugung des Wasserstoffprodukts eingesetzten Kohlenstoffs in Form von Kohlendioxid abtrennen und durch Sequestrierung entsorgen oder stofflich nutzen. Je nach den gesetzlichen Vorgaben und den bei überhöhten Kohlendioxidemissionen zu leistenden Pönalen, kann es wünschenswert sein, höhere Kohlenstoff-Abtrennquoten zu realisieren.

Aufgabe der vorliegenden Erfindung ist es daher, ein Verfahren der gattungsgemäßen Art sowie eine Vorrichtung zu dessen Durchführung anzugeben, die es erlauben, Kohlenstoff-Abtrennquoten von mehr als 90% mit geringerem Aufwand als im Stand der Technik zu erreichen.

Diese Aufgabe wird verfahrensseitig erfindungsgemäß dadurch gelöst, dass die Druckwechseladsorption stets so betrieben wird, dass das DWA-Restgas in einer Menge anfällt, die ausreicht, um den gesamten Bedarf an Prozesswärme allein durch die Verbrennung von Restgas zu decken.

Falls bei einem auf maximale Reinwasserstoffausbeute ausgelegten Betrieb der Druckwechseladsorption eine DWA-Restgasmenge anfällt, die nicht ausreicht, um allein durch ihre Verbrennung den Prozesswärmebedarf zu decken, wird erfindungsgemäß beispielsweise die Zeit verkürzt, in der den Adsorbern Rohwasserstoff zugeführt wird (Adsorptionszeit), während die Zeit für die Adsorberregenerierung (Regenerierzeit) und die hierbei eingesetzte Regeneriergasmenge konstant gehalten werden. Durch diese Maßnahmen wird nicht nur die Menge des DWA-Restgas gesteigert, sondern es wird auch eine größere Reinheit des erzeugten Wasserstoffs erreicht. Damit ist es möglich, die Druckwechseladsorption kostengünstiger auszuführen oder sich Vorteile in einer nachgeschalteten Ammoniaksynthese zu verschaffen. Möglich ist es auch, Adsorptions- und Regenerierzeit unverändert zu lassen und den Regenerierduck sowie die Menge der Regeneriergase (Spülgas und Reinwasserstoff) zu erhöhen

Sinnvollerweise wird das DWA-Restgas in einer Menge gebildet, die genau zur Deckung des Prozesswärmebedarfs ausreicht. Möglich ist es aber auch, eine größere Menge des DWA-Restgases zu bilden und den nicht im Prozess einsetzbaren Teil gegen Gutschrift zu exportieren.

Durch das erfindungsgemäße Verfahren vermindert sich zwar aufgrund der im Vergleich zum Stand der Technik geringeren Wasserstoffausbeute zunächst die Wirtschaftlichkeit der Wasserstofferzeugung. Da jedoch eine größere DWA-Restgasmenge für die Erzeugung von Prozesswärme zur Verfügung steht, kann dieser Nachteil ausgeglichen werden, wenn das DWA-Restgas einen kohlenstoffhaltigen Brennstoff ersetzt und weniger Kohlendioxid in die Atmosphäre freigesetzt wird, so dass sich evtl. fällige Pönalen verringern und gesetzliche Vorgaben eingehalten werden können. Darüber hinaus ergeben sich wirtschaftliche Vorteile, wenn das Wasserstoffprodukt mit erhöhter Reinheit in einem Folgeprozess wie beispielsweise einer Ammoniak- oder einer Methanolsynthese eingesetzt werden kann.

Zur Abtrennung von Kohlendioxid aus Synthesegas sind aus dem Stand der Technik verschiedene Trennmethoden bekannt. Insbesondere können in einem CO₂-Trennschritt Kombinationsverfahren aus Membrantrennung, Druckwechseladsorption und kryogener Gaszerlegung zum Einsatz kommen. Vorzugsweise wird der CO₂-Trennschritt als Sauergaswäsche durchgeführt, bei der beispielsweise eine alkalische wässrige Aminlösung als Waschmittel dient.

Bevorzugt wird das DWA-Restgas verbrannt, um für den Prozess benötigten Dampf zu gewinnen oder um einen oder mehrere Einsatzstoffe für die Reformierung vorzuwärmen. Möglich ist aber auch, einen zur Reformierung eingesetzten Dampfreformer oder einen Vorreformer mit DWA-Restgas zu beheizen.

Die Umsetzung des kohlenstoffhaltigen Einsatzes kann im Rahmen des erfindungsgemäßen Verfahrens durch Partielle Oxidation, Autothermalreformierung, Dampfreformierung oder eine Kombination von zwei oder mehr dieser Verfahren erfolgen, denen eine Vorreformierung vorangehen kann. Mit besonderem Vorzug kann das erfindungsgemäße Verfahren dann eingesetzt werden, wenn der kohlenstoffhaltige Einsatz durch Autothermalreformierung oder Partielle Oxidation umgesetzt wird. Anders als beim Einsatz eines Dampfreformers, werden in diesen Fällen nur kleinere, beispielsweise zur Anwärmung von Einsatzstoffen oder zur Dampferzeugung eingesetzte Öfen unter Freisetzung von vergleichsweise geringen Rauchgasmengen in die Atmosphäre beheizt.

Das erfindungsgemäße Verfahren eignet sich insbesondere zum Einsatz in einer Ammoniaksynthese, wobei der aus dem Rohwasserstoff erhaltene Reinwasserstoff durch Stickstoffzugabe zu einem Ammoniaksynthesegas aufbereitet wird, dass das Wasserstoffprodukt darstellt.

Weiterhin betrifft die Erfindung eine Vorrichtung zur Erzeugung eines Wasserstoffprodukts, mit einer Reformiereinrichtung und einem mit der Reformiereinrichtung verbundenen Wassergas-Konverter, mit denen ein kohlenstoffhaltiger Einsatz durch Reformierung und Wassergas-Konversion zu einem Wasserstoff und Kohlendioxid enthaltenen Synthesegas umgesetzt werden kann, einer CO₂-Trenneinrichtung, mit der aus dem Synthesegas Kohlendioxid abtrennbar ist, um Rohwasserstoff zu erhalten, einem Druckwechseladsorber (DWA), mit dem der Rohwasserstoff in Reinwasserstoff und ein kohlenstoffarmes, wasserstoffreiches DWA-Restgas getrennt werden kann, sowie einer Verbrennungseinrichtung, in der das DWA-Restgas zur Gewinnung von Prozesswärme verbrennbar ist, wobei die CO₂-Trenneinrichtung mit einer Einrichtung zur Sequestrierung oder stofflichen Nutzung des aus dem Synthesegas abgetrennten Kohlendioxids verbunden oder verbindbar ist.

Die gestellte Aufgabe wird vorrichtungsseitig erfindungsgemäß dadurch gelöst, dass der Druckwechseladsorber so betreibbar ist, dass das DWA-Restgas in einer Menge erzeugt werden kann, die ausreicht, um den Bedarf an Prozesswärme allein durch die Verbrennung von DWA-Restgas zu decken.

Vorzugsweise ist oder umfasst die CO₂-Trenneinrichtung eine Sauergaswäsche, in der beispielsweise eine wässrige Aminlösung als Waschmittel eingesetzt werden kann.

Die Reformiereinrichtung umfasst zweckmäßigerweise einen Autothermalreformer oder einen Partialoxidationsreaktor oder einen Dampfreformer oder einer Kombination von zwei oder mehr dieser Apparate, wobei jeweils ein Vorreformer vorgeschaltet sein kann.

Ausgestaltungen der erfindungsgemäßen Vorrichtung sehen vor, dass der brennerbefeuerte Ofen zur Vorwärmung eines Einsatzstoffs für die Reformierung oder zur Bereitstellung von Wärme für die Reformierungsreaktion oder zur Produktion von Prozessdampf ausgelegt ist.

Bevorzugt ist die erfindungsgemäße Vorrichtung mit einer Ammoniak- oder einer Methanolsynthese verbunden ist, der das Wasserstoffprodukt als Einsatzgas aufgegeben werden kann.

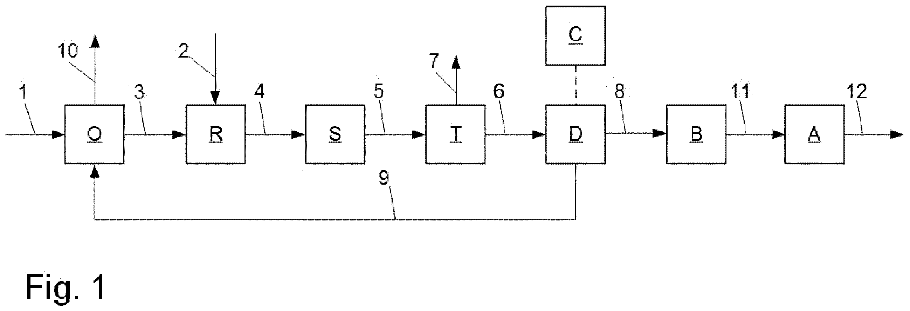

Im Folgenden soll die Erfindung anhand eines in der **Figur 1** schematisch dargestellten Ausführungsbeispiels näher erläutert werden.

Das Ausführungsbeispiel der Figur 1 zeigt eine bevorzugte Ausgestaltung des erfindungsgemäßen Verfahrens, bei der als Wasserstoffprodukt ein Ammoniaksynthesegas unter Verwendung eines Autothermalreformers erzeugt wird.

Dem brennerbefeuerten Ofen O wird ein kohlenstoffhaltiger Einsatz 1, bei dem es sich vorzugsweise um Erdgas handelt, zugeführt, um angewärmt zu werden. Gemeinsam mit Sauerstoff 2 wird der angewärmte Einsatz 3 im Autothermalreformer R zu einem Wasserstoff, Kohlenmonoxid und Wasser umfassenden Syntheserohgas 4 umgesetzt, aus dem im Wassergas-Konverter S ein weitgehend aus Wasserstoff und Kohlendioxid bestehendes Synthesegas 5 erhalten wird. In der CO₂-Abtrennung T wird vorzugsweise ein Aminwaschmittel dazu eingesetzt, um Kohlendioxid aus dem Synthesegas 5 abzutrennen und eine wasserstoffreiche, Kohlenmonoxid, Methan und Reste von Kohlendioxid umfassende, als Rohwasserstoff bezeichnete Gasfraktion 6 sowie eine Kohlendioxidfraktion 7 zu erhalten, die durch Sequestrierung entsorgt oder stofflich genutzt wird (beides nicht dargestellt).

Im Druckwechseladsorber D wird der Rohwasserstoff 6 durch Druckwechseladsorption in Reinwasserstoff 8 sowie ein wasserstoffreiches und Kohlenstoff in Form von Kohlenmonoxid, Kohlendioxid und Methan nur in geringen Mengen enthaltendes DWA-Restgas 9 getrennt, das im brennerbefeuerten Ofen O als Brenngas eingesetzt wird, bei dessen Verbrennung ein Rauchgas 10 entsteht, das nur sehr wenig Kohlendioxid enthält. Über die Regeleinrichtung C wird der Druckwechseladsorber D so eingestellt, dass das DWA-Restgas mit einer Menge erzeugt wird, die dazu ausreicht, den Brennstoffbedarf des brennerbefeuerten Ofens O allein durch DWA-Restgas zu decken, so dass auf die Verfeuerung eines kohlenstoffhaltigen Brennstoffs verzichtet werden kann.

Der Reinwasserstoff 8 wird in der Aufbereitungseinrichtung B beispielsweise durch Stickstoffzumischung zu einem Ammoniaksynthesegas 11 aufbereitet, das weitegehend frei von Sauerstoff enthaltenden Komponenten, insbesondere von Kohlenmonoxid ist und in dem Wasserstoff und Stickstoff in dem für die nachfolgende Ammoniaksynthese A stöchiometrischen Verhältnis von 3:1 vorliegen. Das in der Ammoniaksynthese A erhaltene Ammoniak 12 kann in flüssiger Form gespeichert werden (nicht dargestellt).

## Patentansprüche

1. Verfahren zur Erzeugung eines Wasserstoffprodukts (11), bei dem ein kohlenstoffhaltiger Einsatz (1) durch Reformierung (R) und Wassergas-Shift (S) umgesetzt wird, um ein Wasserstoff und Kohlendioxid enthaltenes Synthesegas (5) zu gewinnen, von dem in einem CO₂-Trennschritt (T) Kohlendioxid (7) zum Erhalt von Rohwasserstoff (6) abgetrennt wird, der unter Einsatz eines Druckwechseladsorbers (D) zum Wasserstoffprodukt (11) aufbereitet wird, wobei ein im Druckwechseladsorber (D) anfallendes kohlenstoffarmes, wasserstoffreiches Restgas (DWA-Restgas) (9) zur Erzeugung von Prozesswärme verbrannt und das im CO₂-Trennschritt (T) aus dem Synthesegas (5) abgetrennte Kohlendioxid (7) durch Sequestrierung entsorgt oder einer stofflichen Nutzung zugeführt wird, **dadurch gekennzeichnet, dass** die Druckwechseladsorption (D) stets so betrieben wird, dass das wasserstoffreiche DWA-Restgas (9) in einer Menge anfällt, die ausreicht, um den gesamten Bedarf an Prozesswärme allein durch die Verbrennung von DWA-Restgas (9) zu decken.

2. Verfahren nach Anspruch 1, **dadurch gekennzeichnet, dass** das DWA-Restgas (9) in einer Menge gebildet wird, die genau zur Deckung des Prozesswärmebedarfs ausreicht.

3. Verfahren nach einem der Ansprüche 1 oder 2, **dadurch gekennzeichnet, dass** der CO₂-Trennschritt (T) als Sauergaswäsche ausgeführt wird.

4. Verfahren nach einem der Ansprüche 1 bis 3, **dadurch gekennzeichnet, dass** das DWA-Restgas (9) zur Dampferzeugung oder zur Vorwärmung eines Einsatzes (1) für die Reformierung (R) oder zur Beheizung eines Dampf- oder eines Vorreformers verbrannt wird.

5. Verfahren nach einem der Ansprüche 1 bis 4, **dadurch gekennzeichnet, dass** die Reformierung (R) eine Autothermalreformierung oder eine Partielle Oxidation oder eine Dampfreformierung oder eine Vorreformierung oder eine Kombination von zwei oder mehr dieser Verfahren umfasst.

6. Verfahren nach einem der Ansprüche 1 bis 5, **dadurch gekennzeichnet, dass** als Wasserstoffprodukt (11) Reinwasserstoff und/oder ein Ammoniaksynthesegas erzeugt wird.

7. Vorrichtung zur Erzeugung eines Wasserstoffprodukts (11), mit einer Reformiereinrichtung (R) und einem mit der Reformiereinrichtung (R) verbundenen Wassergas-Konverter (S), mit denen ein kohlenstoffhaltiger Einsatz (1) durch Reformierung und Wassergas-Konversion zu einem Wasserstoff und Kohlendioxid enthaltenen Synthesegas (5) umgesetzt werden kann, einer CO₂-Trenneinrichtung (T), mit der aus dem Synthesegas (5) Kohlendioxid (7) abtrennbar ist, um Rohwasserstoff (6) zu erhalten, einem Druckwechseladsorber (D), mit dem der Rohwasserstoff (6) in Reinwasserstoff (8) und ein kohlenstoffarmes, wasserstoffreiches Restgas (DWA-Restgas) (9) getrennt werden kann, sowie einer Verbrennungseinrichtung (O), in der das DWA-Restgas (9) zur Gewinnung von Prozesswärme verbrennbar ist, wobei die CO2-Trenneinrichtung (T) mit einer Einrichtung zur Sequestrierung oder stofflichen Nutzung des aus dem Synthesegas (5) abgetrennten Kohlendioxids (7) verbunden oder verbindbar ist, **dadurch gekennzeichnet, dass** der Druckwechseladsorber (D) so betreibbar ist, dass das DWA-Restgas (9) stets in einer Menge erzeugt werden kann, die ausreicht, um den Bedarf an Prozesswärme allein durch die Verbrennung von DWA-Restgas (9) zu decken.

8. Vorrichtung nach Anspruch 7, **dadurch gekennzeichnet, dass** die CO₂-Trenneinrichtung (T) eine Sauergaswäsche umfasst.

9. Vorrichtung nach einem der Ansprüche 7 oder 8, **dadurch gekennzeichnet, dass** die Reformiereinrichtung (R) einen Autothermalreformer oder einen Partialoxidationsreaktor oder einen Dampfreformer oder einer Kombination von zwei oder mehr dieser Apparate umfasst.

10. Vorrichtung nach einem der Ansprüche 7 bis 9, **dadurch gekennzeichnet, dass** der brennerbefeuerte Ofen (O) zur Vorwärmung eines Einsatzstoffs (1) für die Reformierung (R) oder zur Bereitstellung von Wärme für die Reformierungsreaktion oder zur Produktion von Prozessdampf ausgelegt ist.

11. Vorrichtung nach einem der Ansprüche 7 bis 10, dass sie mit einer Ammoniaksynthese (A) oder Methanolsynthese verbunden ist, der das Wasserstoffprodukt (11) als Einsatzgas aufgegeben werden kann.
